# EUROPÄISCHE PATENTSCHRIFT

(11) **EP 2 245 893 B1**
(45) Veröffentlichungstag und Bekanntmachung des Hinweises auf die Patenterteilung: **15.02.2012**
(21) Anmeldenummer: 08872851.4
(22) Anmeldetag: 11.12.2008
(51) Int. Cl.: H04W 72/04

(54) **VERFAHREN UND SYSTEM ZUR BANDBREITENDETEKTION**
METHOD AND SYSTEM FOR BANDWIDTH DETECTION
PROCÉDÉ ET SYSTÈME DE DÉTECTION DE BANDE PASSANTE

(30) Priorität: 26.02.2008 DE 102008011122
(43) Veröffentlichungstag der Anmeldung: 03.11.2010
(73) Patentinhaber: Rohde & Schwarz GmbH & Co. KG, 81671 München (DE)
(72) Erfinder: GERLACH, Heino, 81541 München (DE); SCHUMACHER, Adrian, 81541 München (DE)
(74) Vertreter: Körfer, Thomas
(86) Internationale Anmeldenummer: PCT/EP2008/010538
(87) Internationale Veröffentlichungsnummer: WO 2009/106116

(56) Entgegenhaltungen:
- EP-A- 1 811 712
- DE-A1- 19 854 252
- DE-A1-102006 037 056
- GB-A- 2 434 279
- SIEMENS: "Considerations on E-UTRA Cell Search and Initial Access" 3GPP TSG-RAN WG1 #44, 13. Februar 2006 (2006-02-13), - 17. Februar 2006 (2006-02-17) Seiten 1-4, XP002520376 Denver

## Beschreibung

Die Erfindung betrifft ein Verfahren und ein System zur Detektion der Bandbreite eines von einem Sender, insbesondere einem Mobilfunkgerät, abgestrahlten Signals, insbesondere für den LTE (Long Term Evolution) -Standard für die 4. Generation Mobiltelefone.

Herkömmlich wird mobilen Teilnehmern in Funkkommunikationssystemen von einer Basisstation ein Kanal bzw. eine Mehrzahl von Kanälen zugewiesen. Der mobile Teilnehmer darf lediglich diesen Kanal bzw. diese Kanäle nutzen. Verlässt der mobile Teilnehmer den ihm zugewiesenen bzw. die ihm zugewiesenen Kanäle, z.B. durch Senden mit einer größeren Bandbreite, werden im benachbarten Frequenzbereich angesiedelte Übertragungen gestört. Dies tritt auf, wenn der mobile Teilnehmer die Kanalzuweisung entweder inkorrekt empfangen hat, oder nicht korrekt auf die Kanalzuweisung reagiert. Üblicherweise werden solche Schwierigkeiten nicht eigens aufgelöst. So wird erst bei Feststellung von Übertragungsschwierigkeiten z.B. durch eine mangelnde Synchronisierung des mobilen Teilnehmers und der Basisstation eine Überprüfung der Kanalzuweisung bzw. eine Neuzuweisung durchgeführt. Eine Ermittlung der tatsächlich von dem mobilen Teilnehmer gesendeten Bandbreite erfolgt hierbei nicht. Die Basisstation stellt somit erst nach Durchlaufen mehrerer erfolgloser Empfangsvorgänge fest, dass der mobile Teilnehmer mit einer inkorrekten Bandbreite sendet. Die Effizienz der Übertragung wird hierdurch verringert.

So zeigt die Patentanmeldung GB 2 434 279 A ein Verfahren zur Zuweisung von Ressourcen an einzelne Teilnehmer in einem Kommunikationssystem. Eine Überwachung der Einhaltung dieser zugewiesenen Ressourcen wird jedoch nicht gezeigt. Die deutsche Offenlegungsschrift DE 103 37 828 A1 zeigt ein Verfahren zur Auswahl eines Übertragungskanals auf welchen ein mobiles Endgerät Nachrichten an eine Basisstation überträgt. Eine Überwachung der Einhaltung des ausgewählten Kanals findet auch hier nicht statt.

Die Druckschrift EP 1 811 712 A2 beschreibt ein OFDM Funkkommunikationssystem, bei dem Ressourcen in Form von Senderahmen zugewiesen werden, die über eine feste zeitliche Ausdehnung und eine variable spektrale Ausdehnung verfügen, und aus einer Mehrzahl von Untereinheiten bestehen. Dabei wird eine Empfangsbandbreite in einer Basisstation durch Ermittlung einer empfangenen Bandbreite sämtlicher mit der Basisstation verbundener Teilnehmer bestimmt.

Der Erfindung liegt die Aufgabe zu Grunde, ein Verfahren und ein System zur Ermittlung der Bandbreite eines übertragenen Signals zu schaffen, welches lediglich geringen Aufwand erfordert.

Die Aufgabe wird erfindungsgemäß für das Verfahren durch die Merkmale des unabhängigen Anspruchs 1 und für das System durch die Merkmale des unabhängigen Anspruchs 11 gelöst. Vorteilhafte Weiterbildungen sind Gegenstand der hierauf rückbezogenen Unteransprüche.

Die Bandbreite, welche von einem Sender in einem Funkkommunikationssystem, welches auf Senderahmen basiert, übertragen wird, wird detektiert. Die Senderahmen verfügen über eine feste zeitliche Ausdehnung und eine variable spektrale Ausdehnung. Die Senderahmen bestehen aus einer Mehrzahl an Untereinheiten. Jede Untereinheit der Senderahmen enthält einen Kontrollkanal, welcher in zwei Teil-Kontrollkanäle aufgeteilt ist. Die beiden Teil-Kontrollkanäle sind an den spektralen Rändern der Untereinheiten der Senderahmen angeordnet. Die übertragene Bandbreite wird durch Bestimmung der spektralen Ausdehnung des Senderahmens ermittelt. Die spektrale Ausdehnung des Senderahmens wird durch Bestimmung der spektralen Positionen der Teil-Kontrollkanäle in den Untereinheiten der Senderahmen bestimmt. So kann ohne zusätzliche Kommunikation die Bandbreite des übertragenen Signals bestimmt werden. So ist ein nur sehr geringer Aufwand der Bandbreitenermittlung notwendig. Weiterhin ist so eine eindeutige Zuordnung des gesendeten Signals zu einem bestimmten Sender möglich.

Zumindest in einer Untereinheit eines Senderahmens werden bevorzugt mittels des Kontrollkanals Informationen übertragen. Die Bestimmung der spektralen Ausdehnung des Senderahmens erfolgt bevorzugt während der Übertragung von Informationen mittels des Kontrollkanals.

Eine Untereinheit eines Senderahmens besteht bevorzugt aus zumindest zwei Slots. Ein Slot ist vorteilhafterweise ein zeitlicher Abschnitt einer Untereinheit eines Senderahmens. Während des ersten Slots der zumindest einen Untereinheit des Senderahmens, in welchem mittels des Kontrollkanals Informationen übertragen werden, werden diese bevorzugt mittels des ersten Teil-Kontrollkanals übertragen. Während des zweiten Slots der zumindest einen Untereinheit des Senderahmens, in welchem mittels des Kontrollkanals Informationen übertragen werden, werden diese bevorzugt mittels des zweiten Teil-Kontrollkanals übertragen.

Vorteilhafterweise verfügen die Teil-Kontrollkanäle über eine feste spektrale Ausdehnung. Eine sehr genaue Ermittlung der Sendesignal-Bandbreite ist so möglich.

Vorteilhafterweise besteht ein Senderahmen aus 2 - 20, besonders vorteilhafterweise aus 10 Untereinheiten. Vorteilhafterweise werden genau in einer Untereinheit in jedem Senderahmen Informationen auf dem Kontrollkanal übertragen. So wird nur ein geringer Teil der Gesamtbandbreite von dem Kontrollkanal eingenommen. Eine hohe Netto-Datenrate ist so möglich.

Bevorzugt enthalten sämtliche Untereinheiten der Senderahmen einen Datenkanal. In einer Untereinheit der Senderahmen werden bevorzugt entweder Informationen mittels des Kontrollkanals oder mittels des Datenkanals übertragen. So ist eine eindeutige Unterscheidung zwischen Nutzdaten und Kontrolldaten möglich. Die Sicherheit der Übertragung wird damit verbessert.

Bevorzugt wird die Bandbreite der Senderahmen von einem weiteren Sender in dem Funkkommunikationssystem vorgegeben. Die Abweichung der von dem Sender gesendeten Bandbreite von der von dem weiteren Sender vorgegebenen Bandbreite wird bevorzugt ermittelt. So ist ohne zusätzliche Kommunikation und einer damit verbundenen Reduktion der für Nutzdaten verfügbaren Bandbreite eine Überwachung der Einhaltung der vorgegebenen Bandbreite möglich.

Die spektrale Position der Teil-Kontrollkanäle wird bevorzugt mittels Korrelation bestimmt. So sind eine sichere Detektion der Teil-Kontrollkanäle und damit eine sichere Bestimmung der Bandbreite möglich.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: einen beispielhaften Senderahmen;
- Fig. 2: eine erste beispielhafte Untereinheit eines Senderahmens, und
- Fig. 3: eine zweite beispielhafte Untereinheit eines Senderahmens.

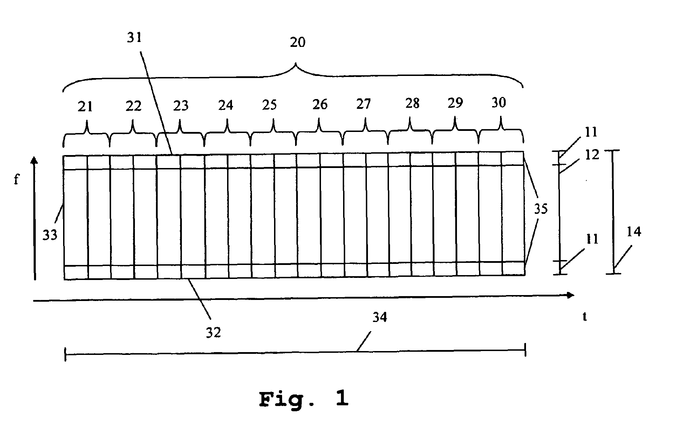

Zunächst wird anhand der Fig. 1 der Aufbau und die Funktionsweise eines beispielhaften Senderahmens erläutert. Anhand der Fig. 1 - 3 wird daraufhin die Funktion des erfindungsgemäßen Verfahrens erläutert. Identische Elemente wurden in ähnlichen Abbildungen zum Teil nicht wiederholt dargestellt und beschrieben.

Fig. 1 zeigt einen beispielhaften Senderahmen 20. In einem Kommunikationssystem werden Nachrichten basierend auf Senderahmen 20 versandt. Ein Senderahmen 20 ist ein von der zeitlichen und spektralen Dimension aufgespannter Bereich, innerhalb welchem Nachrichten übertragen werden können. Ein Senderahmen 20 verfügt dabei über eine feste zeitliche Ausdehnung 34 und eine variable spektrale Ausdehnung 14. Die spektrale Ausdehnung 14 des Senderahmens 20 wird dabei von einem entfernten Teilnehmer an der Kommunikation, z.B. einer Basisstation in einem Mobilfunksystem, festgelegt. Der diesseitige Teilnehmer an der Kommunikation, z.B. ein mobiles Funkgerät, sendet seine Nachrichten mit der festgelegten spektralen Ausdehnung 14.

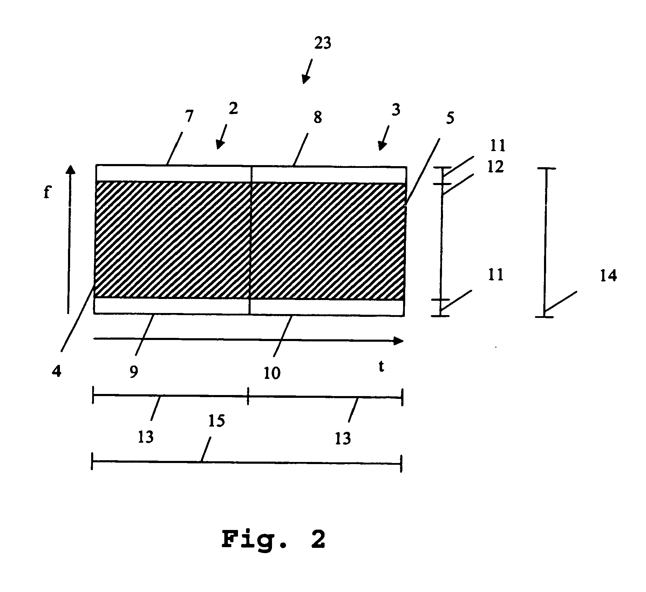

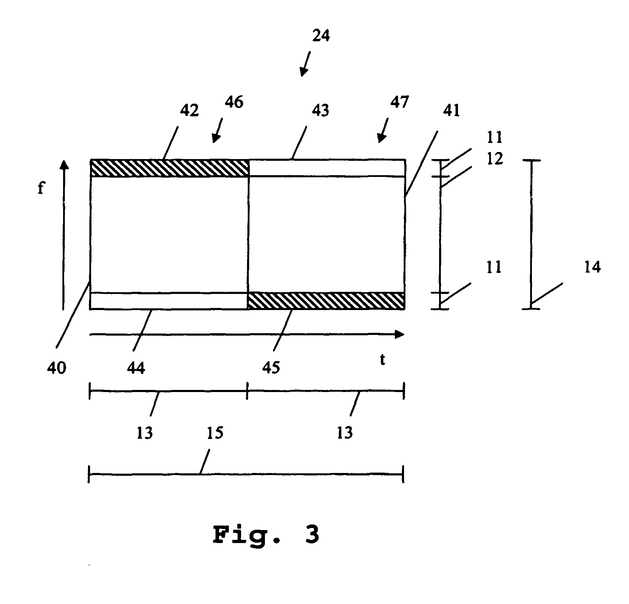

Ein Senderahmen 20 besteht dabei aus einer Mehrzahl an Untereinheiten 21, 22, 23, 24, 25, 26, 27, 28, 29, 30. Jede Untereinheit 21, 22, 23, 24, 25, 26, 27, 28, 29, 30 verfügt dabei über eine feste zeitlich Ausdehnung und eine variable spektrale Ausdehnung 14, welche der spektralen Ausdehnung 14 des Senderahmens 20 entspricht. Darüber hinaus weist jede Untereinheit 21, 22, 23, 24, 25, 26, 27, 28, 29, 30 dabei zumindest zwei Slots auf. Hierauf wird ausgehend von Fig. 2 und Fig. 3 näher eingegangen.

Jede Untereinheit 21, 22, 23, 24, 25, 26, 27, 28, 29, 30 verfügt weiterhin über einen Datenkanal 33 und einen Kontrollkanal 35. Der Datenkanal 33 ist dabei spektral zwischen zwei Teil-Kontrollkanälen 31, 32 angeordnet. Der Datenkanal 33 verfügt dabei über eine variable spektrale Ausdehnung 12. Die zwei Teil-Kontrollkanäle 31, 32 verfügen über eine feste spektrale Ausdehnung 11. Jede Variation der spektralen Ausdehnung 14 des Senderahmens 20 wird durch eine Variation der spektralen Ausdehnung 12 des Datenkanals 33 ausgelöst.

Die gesendete spektrale Ausdehnung 14 der Senderahmen 20 kann jedoch von der festgelegten spektralen Ausdehnung abweichen. Dies kann z.B. durch einen Übertragungsfehler der festgelegten spektralen Ausdehnung, oder eine mangelnde Standardkonformität eines Teilnehmergeräts vorkommen. Um die tatsächlich gesendete spektrale Ausdehnung 14 der Senderahmen 20 zu ermitteln wird das im Folgenden beschriebene Verfahren eingesetzt.

In Fig. 2 wird eine erste beispielhafte Untereinheit 23 eines Senderahmens 20 dargestellt. Die Untereinheit 23 besteht dabei aus zwei Slots 2, 3. Jeder Slot 2, 3 verfügt dabei über eine feste zeitliche Ausdehnung 13 und eine variable spektrale Ausdehnung 14. Jeder Slot 2, 3 verfügt dabei über einen Datenkanal 4, 5 und zwei Teil-Kontrollkanäle 7, 8, 9, 10. Die Teil-Kontrollkanäle 7, 8, 9, 10 sind dabei spektral oberhalb und unterhalb des

Datenkanals 4, 5 angeordnet. Die spektrale Ausdehnung 11 der beiden Teil-Kontrollkanäle 7, 8, 9, 10 ist dabei festgelegt. Die spektrale Ausdehnung 12 des Datenkanals 4, 5 ist variabel, und von der spektralen Ausdehnung 14 des Senderahmens 20 abhängig. In der hier gezeigten Untereinheit 23 des Senderahmens 20 werden gegenwärtig lediglich mittels des Datenkanals 4, 5 Daten übertragen.

Die als Teil-Kontrollkanäle 7, 8, 9, 10 vorgesehenen spektralen Bereiche bleiben ungenutzt. Der überwiegende Anteil der Untereinheiten 21, 22, 23, 25, 26, 27, 28, 29, 30 des Senderahmens 20 verfügt über diese Aufteilung. So ist beispielsweise in 9 von 10 Untereinheiten 21, 22, 23, 25, 26, 27, 28, 29, 30 des Senderahmens 20 lediglich der Datenkanal 4, 5 belegt, während die Teil-Kontrollkanäle 7, 8, 9, 10 unbelegt sind. In lediglich einer Untereinheit 24 der Senderahmen 20 sind der Datenkanal 4, 5 unbelegt und gleichzeitig die Teil-Kontrollkanäle 7, 8, 9, 10 belegt. Eine gleichzeitige Belegung des Datenkanals 4, 5 und des Kontrollkanals in einer Untereinheit 21, 22, 23, 24, 25, 26, 27, 28, 29, 30 ist nicht möglich.

Fig. 3 zeigt eine zweite beispielhafte Untereinheit 24 des Senderahmens 20. In dieser Untereinheit 24 ist der geschilderte Fall der Belegung der Teil-Kontrollkanäle 42, 43, 44, 45 dargestellt. Derweil ist der Datenkanal 40, 41 unbelegt. An dieser Darstellung ist eine alternierende Belegung der beiden spektralen Teile 42, 43 und 44, 45 der Teil-Kontrollkanäle 42, 43, 44, 45 ersichtlich. So ist in einem ersten Slot 46 der Untereinheit 24 der spektral über dem Datenkanal 40 angeordnete Teil-Kontrollkanal 42 belegt. Der Datenkanal 40 und der spektral unterhalb des Datenkanals 40 angeordnete Teil-Kontrollkanal 44 sind nicht belegt. In einem zweiten Slot 47 ist der spektral unterhalb des Datenkanals 41 angeordnete Teil-Kontrollkanal 45 belegt, während der spektral oberhalb des Datenkanals 41 gelegene Teil-Kontrollkanal 43 und der Datenkanal 41 nicht belegt sind.

Anhand dieser alternierenden Belegung der Teil-Kontrollkanäle 42, 43, 44, 45 wird nun die tatsächlich genutzte spektrale Ausdehnung 14 des Senderahmens 20 ermittelt. Während der erste Slot 46 einer Untereinheit 24 des Senderahmens 20 mit belegtem Kontrollkanal gesendet wird, wird die spektrale Position des belegten Teil-Kontrollkanals 42 ermittelt. Die spektrale Ausdehnung 11 des Teil-Kontrollkanals 42 ist bekannt. Während der zweite Slot 47 einer Untereinheit 24 des Senderahmens 20 mit belegtem Kontrollkanal gesendet wird, wird die spektrale Position des belegten Teil-Kontrollkanals 45 ermittelt. Auch die spektrale Ausdehnung 11 dieses Teil-Kontrollkanals 45 ist bekannt.

Da sich die spektrale Position und die spektrale Ausdehnung 11 der Teil-Kontrollkanäle 42, 43, 44, 45 über den Verlauf eines Senderahmens 20 nicht ändern, kann aus diesen auf den gesamten Senderahmen 20 geschlossen werden. Aus der spektralen Position und der spektralen Ausdehnung 11 der Teil-Kontrollkanäle 42, 45 wird somit anschließend die gesamte spektrale Ausdehnung 14 des Senderahmens 20 ermittelt. So kann ermittelt werden, ob die tatsächliche gesendete spektrale Ausdehnung 14 des Senderahmens 20 mit der vorgesehenen spektralen Ausdehnung übereinstimmt. Die Länge einer FFT (Fast Fourier Transformation) kann dadurch beschränkt werden.

Die Erfindung ist nicht auf das dargestellte Ausführungsbeispiel beschränkt. Wie bereits erwähnt, können z.B. unterschiedliche Funkkommunikationsstandards zum Einsatz kommen. Auch eine abweichende Aufteilung der Senderahmen in Untereinheiten und Slots bzw. in gänzlich unterschiedliche Abschnitte ist denkbar.

## Patentansprüche

1. Verfahren zur Detektion der von einem Sender übertragenen Bandbreite in einem Funkkommunikationssystem, wobei das Funkkommunikationssystem auf Senderahmen (20) basiert,
wobei die Senderahmen (20) über eine feste zeitliche Ausdehnung (34) und eine variable spektrale Ausdehnung (14) verfügen,
wobei die Senderahmen (20) aus einer Mehrzahl an Untereinheiten (21, 22, 23, 24, 25, 26, 27, 28, 29, 30) bestehen,
wobei jede Untereinheit (21, 22, 23, 24, 25, 26, 27, 28, 29, 30) der Senderahmen (20) einen Kontrollkanal, welcher in zwei Teil-Kontrollkanäle (7, 8, 9, 10, 31, 32, 42, 43, 44, 45) aufgeteilt ist, enthält,
wobei die beiden Teil-Kontrollkanäle (7, 8, 9, 10, 31, 32, 42, 43, 44, 45) an den spektralen Rändern der Untereinheiten (21, 22, 23, 24, 25, 26, 27, 28, 29, 30) der Senderahmen (20) angeordnet sind,
wobei die übertragene Bandbreite durch Bestimmung der spektralen Ausdehnung (14) des Senderahmens (20) ermittelt wird,
wobei die spektrale Ausdehnung (14) des jeweiligen Senderahmens (20) durch Bestimmung der spektralen Positionen der Teil-Kontrollkanäle (7, 8, 9, 10, 31, 32, 42, 43, 44, 45) in den Untereinheiten (21, 22, 23, 24, 25, 26, 27, 28, 29, 30) der Senderahmen (20) bestimmt wird.

2. Verfahren nach Anspruch 1,
**dadurch gekennzeichnet,**
**dass** zumindest in einer Untereinheit (24) eines Senderahmens (20) mittels des Kontrollkanals Informationen übertragen werden, und
**dass** die Bestimmung der spektralen Ausdehnung (14) des jeweiligen Senderahmens (20) während der Übertragung von Informationen mittels des Kontrollkanals erfolgt.

3. Verfahren nach Anspruch 2,
**dadurch gekennzeichnet,**
**dass** eine Untereinheit (21, 22, 23, 24, 25, 26, 27, 28, 29, 30) eines Senderahmens (20) aus zumindest zwei Slots (2, 3, 46, 47) besteht,
**dass** ein Slot (2, 3, 46, 47) ein zeitlicher Abschnitt einer Untereinheit (21, 22, 23, 24, 25, 26, 27, 28, 29, 30) eines Senderahmens (20) ist,
**dass** während des ersten Slots (46) der zumindest einen Untereinheit (21, 22, 23, 24, 25, 26, 27, 28, 29, 30) des Senderahmens (20), in welchem mittels des Kontrollkanals Informationen übertragen werden, diese mittels des ersten Teil-Kontrollkanals (42) übertragen werden, und
**dass** während des zweiten Slots (47) der zumindest einen Untereinheit (21, 22, 23, 24, 25, 26, 27, 28, 29, 30) des Senderahmens (20), in welchem mittels des Kontrollkanals Informationen übertragen werden, diese mittels des zweiten Teil-Kontrollkanals (45) übertragen werden.

4. Verfahren nach einem der Ansprüche 1 bis 3,
**dadurch gekennzeichnet,**
**dass** der Sender ein Mobilkommunikationsgerät ist.

5. Verfahren nach einem der Ansprüche 1 bis 4,
**dadurch gekennzeichnet,**
**dass** die Teil-Kontrollkanäle (7, 8, 9, 10, 31, 32, 42, 43, 44, 45) über eine feste spektrale Ausdehnung (11) verfügen.

6. Verfahren nach einem der Ansprüche 1 bis 5,
**dadurch gekennzeichnet,**
**dass** ein Senderahmen (20) aus 2 bis 20, bevorzugt 10 Untereinheiten (21, 22, 23, 24, 25, 26, 27, 28, 29, 30) besteht, und
**dass** genau in einer Untereinheit (24) in jedem Senderahmen (20) Informationen auf dem Kontrollkanal übertragen werden.

7. Verfahren nach Anspruch 6,
**dadurch gekennzeichnet,**
**dass** sämtliche Untereinheiten (21, 22, 23, 24, 25, 26, 27, 28, 29, 30) der Senderahmen (20) einen Datenkanal (4, 5 33, 40, 41) enthalten,
**dass** in einer Untereinheit (21, 22, 23, 24, 25, 26, 27, 28, 29, 30) der Senderahmen (20) entweder Informationen mittels des Kontrollkanals oder mittels des Datenkanals (4, 5 33, 40, 41) übertragen werden.

8. Verfahren nach einem der Ansprüche 1 bis 7,
**dadurch gekennzeichnet,**
**dass** die Bandbreite der Senderahmen (20) von einem weiteren Sender in dem Funkkommunikationssystem vorgegeben wird.

9. Verfahren nach Anspruch 8,
**dadurch gekennzeichnet,**
**dass** die Abweichung der von dem Sender gesendeten Bandbreite von der von dem weiteren Sender vorgegebenen Bandbreite ermittelt wird.

10. Verfahren nach einem der Ansprüche 1 bis 9,
**dadurch gekennzeichnet,**
**dass** die spektrale Position der Teil-Kontrollkanäle (7, 8, 9, 10, 31, 32, 42, 43, 44, 45) mittels Korrelation bestimmt wird.

11. Detektionssystem zur Detektion der von einem Sender übertragenen Bandbreite in einem Funkkommunikationssystem, wobei das Funkkommunikationssystem auf Senderahmen (20) basiert,
wobei die Senderahmen (20) über eine feste zeitliche Ausdehnung (34) und eine variable spektrale Ausdehnung (14) verfügen,
wobei die Senderahmen (20) aus einer Mehrzahl an Untereinheiten (21, 22, 23, 24, 25, 26, 27, 28, 29, 30) bestehen,
wobei jede Untereinheit (21, 22, 23, 24, 25, 26, 27, 28, 29, 30) der Senderahmen (20) einen Kontrollkanal, welcher in zwei Teil-Kontrollkanäle (7, 8, 9, 10, 31, 32, 42, 43, 44, 45) aufgeteilt ist, enthält,
wobei die beiden Teil-Kontrollkanäle (7, 8, 9, 10, 31, 32, 42, 43, 44, 45) an den spektralen Rändern der Untereinheiten (21, 22, 23, 24, 25, 26, 27, 28, 29, 30) der Senderahmen (20) angeordnet sind,
wobei das Detektionssystem Mittel zur Bestimmung der übertragenen Bandbreite durch Bestimmung der spektralen Ausdehnung (14) des Senderahmens (20) beinhaltet, und wobei die Mittel zur Bestimmung der spektralen Ausdehnung (14) die spektrale Ausdehnung des jeweiligen Senderahmens (20) durch Bestimmung der spektralen Positionen der Teil-Kontrollkanäle (7, 8, 9, 10, 31, 32, 42, 43, 44, 45) in den Untereinheiten (21, 22, 23, 24, 25, 26, 27, 28, 29, 30) der Senderahmen (20) bestimmen.

12. Detektionssystem nach Anspruch 11,
**dadurch gekennzeichnet,**
**dass** das Detektionssystem derart ausgestaltet ist,
**dass** zumindest in einer Untereinheit (24) eines Senderahmens (20) mittels des Kontrollkanals Informationen übertragen werden, und
**dass** die Bestimmung der spektralen Ausdehnung (14) des jeweiligen Senderahmens (20) während der Übertragung von Informationen mittels des Kontrollkanals erfolgt.

13. Detektionssystem nach Anspruch 12,
**dadurch gekennzeichnet,**
**dass** das Detektionssystem derart ausgestaltet ist,
**dass** eine Untereinheit (21, 22, 23, 24, 25, 26, 27, 28, 29, 30) eines Senderahmens (20) aus zumindest zwei Slots (2, 3, 46, 47) besteht,
**dass** ein Slot (2, 3, 46, 47) ein zeitlicher Abschnitt einer Untereinheit (21, 22, 23, 24, 25, 26, 27, 28, 29, 30) eines Senderahmens (20) ist,
**dass** während des ersten Slots (46) der zumindest einen Untereinheit (21, 22, 23, 24, 25, 26, 27, 28, 29, 30) des Senderahmens (20), in welchem mittels des Kontrollkanals Informationen übertragen werden, diese mittels des ersten Teil-Kontrollkanals (42) übertragbar sind, und
**dass** während des zweiten Slots (47) der zumindest einen Untereinheit (21, 22, 23, 24, 25, 26, 27, 28, 29, 30) des Senderahmens (20), in welchem mittels des Kontrollkanals Informationen übertragen werden, diese mittels des zweiten Teil-Kontrollkanals (45) übertragbar sind.

14. Detektionssystem nach einem der Ansprüche 11 bis 13, **dadurch gekennzeichnet,**
**dass** das Detektionssystem derart ausgestaltet ist,
**dass** der Sender ein Mobilkommunikationsgerät ist.

15. Detektionssystem nach einem der Ansprüche 11 bis 14, **dadurch gekennzeichnet,**
**dass** das Detektionssystem derart ausgestaltet ist,
**dass** die Teil-Kontrollkanäle (7, 8, 9, 10, 31, 32, 42, 43, 44, 45) über eine feste spektrale Ausdehnung (11) verfügen.

16. Detektionssystem nach einem der Ansprüche 11 bis 15, **dadurch gekennzeichnet,**
**dass** das Detektionssystem derart ausgestaltet ist,
**dass** ein Senderahmen (20) aus 2 bis 20, bevorzugt 10 Untereinheiten (21, 22, 23, 24, 25, 26, 27, 28, 29, 30) besteht, und
**dass** genau in einer Untereinheit (24) in jedem Senderahmen (20) Informationen auf dem Kontrollkanal übertragbar sind.

17. Detektionssystem nach Anspruch 16,
**dadurch gekennzeichnet,**
**dass** das Detektionssystem derart ausgestaltet ist,
**dass** sämtliche Untereinheiten (21, 22, 23, 24, 25, 26, 27, 28, 29, 30) der Senderahmen (20) einen Datenkanal (4, 5 33, 40, 41) enthalten, und
**dass** in einer Untereinheit (21, 22, 23, 24, 25, 26, 27, 28, 29, 30) der Senderahmen (20) entweder Informationen mittels des Kontrollkanals oder mittels des Datenkanals (4, 5 33, 40, 41) übertragbar sind.

18. Detektionssystem nach einem der Ansprüche 11 bis 17, **dadurch gekennzeichnet,**
**dass** das Detektionssystem derart ausgestaltet ist,
**dass** die Bandbreite der Senderahmen (20) von einem weiteren Sender in dem Funkkommunikationssystem vorgegeben ist.

19. Detektionssystem nach Anspruch 18,
**dadurch gekennzeichnet,**
**dass** das Detektionssystem derart ausgestaltet ist,
**dass** die Abweichung der von dem Sender gesendeten Bandbreite von der von dem weiteren Sender vorgegebenen Bandbreite ermittelbar ist.

20. Detektionssystem nach einem der Ansprüche 11 bis 19, **dadurch gekennzeichnet,**
**dass** das Detektionssystem derart ausgestaltet ist,
**dass** die spektrale Position der Teil-Kontrollkanäle (7, 8, 9, 10, 31, 32, 42, 43, 44, 45) mittels Korrelation bestimmbar ist.

## Claims

1. A method for detecting the bandwidth transmitted by a transmitter within a radio communications system, wherein the radio communications system is based upon transmission frames (20),
wherein the transmission frames (20) comprise a fixed time extension (34) and a variable spectral extension (14),
wherein the transmission frames (20) consist of a plurality of sub-units (21, 22, 23, 24, 25, 26, 27, 28, 29, 30),
wherein each sub-unit (21, 22, 23, 24, 25, 26, 27, 28, 29, 30) of the transmission frames (20) contains a control channel, which is subdivided into two sub-control channels (7, 8, 9, 10, 31, 32, 42, 43, 44, 45),
wherein the two sub-control channels (7, 8, 9, 10, 31, 32, 42, 43, 44, 45) are disposed at the spectral edges of the sub-units (21, 22, 23, 24, 25, 26, 27, 28, 29, 30) of the transmission frames (20),
wherein the transmitted bandwidth is investigated by determining the spectral extension (14) of the transmission frame (20),
wherein the spectral extension (14) of the respective transmission frame (20) is determined by determining the spectral positions of the sub-control channels (7, 8, 9, 10, 31, 32, 42, 43, 44, 45) in the sub-units (21, 22, 23, 24, 25, 26, 27, 28, 29, 30) of the transmission frames (20).

2. The method according to claim 1,
**characterised in that**,
at least in one sub-unit (24) of a transmission frame (20), information is transmitted by means of the control channel, and
that the determination of the spectral extension (14) of the respective transmission frame (20) is implemented during the transmission of information by means of the control channel.

3. The method according to claim 2,
**characterised in that**
one sub-unit (21, 22, 23, 24, 25, 26, 27, 28, 29, 30) of a transmission frame (20) consists of at least two slots (2, 3, 46, 47),
that a slot (2, 3, 46, 47) is a time portion of a sub-unit (21, 22, 23, 24, 25, 26, 27, 28, 29, 30) of a transmission frame,
that, during the first slot (46) of the at least one sub-unit (21, 22, 23, 24, 25, 26, 27, 28, 29, 30) of the transmission frame (20), in which information is transmitted by means of the control channel, this information is transmitted by means of the first sub-control channel (42), and
that during the second slot (47) of the at least one sub-unit (21, 22, 23, 24, 25, 26, 27, 28, 29, 30) of the transmission frame (20), in which information is transmitted by means of the control channel, this information is transmitted by means of the second sub-control channel (45).

4. The method according to any one of claims 1 to 3,
**characterised in that**
the transmitter is a mobile communications device.

5. The method according to any one of claims 1 to 4,
**characterised in that**
the sub-control channels (7, 8, 9, 10, 31, 32, 42, 43, 44, 45) comprise a fixed spectral extension (11).

6. The method according to any one of claims 1 to 5,
**characterised in that**
a transmission frame (20) consists of 2 to 20, preferably 10 sub-units (21, 22, 23, 24, 25, 26, 27, 28, 29, 30), and
that information is transmitted on the control channel in exactly one sub-unit (24) in every transmission frame (20).

7. The method according to claim 6,
**characterised in that**
all sub-units (21, 22, 23, 24, 25, 26, 27, 28, 29, 30) of the transmission frames (20) contain a data channel (4, 5 33, 40, 41),
that, in one sub-unit (21, 22, 23, 24, 25, 26, 27, 28, 29, 30) of the transmission frames (20), information is transmitted either by means of the control channel or by means of the data channel (4, 5 33, 40, 41).

8. The method according to any one of claims 1 to 7,
**characterised in that**
the bandwidth of the transmission frames (20) is specified by a further transmitter within the radio communications system.

9. The method according to claim 8,
**characterised in that**
the deviation of the bandwidth transmitted by the transmitter from the bandwidth specified by the further transmitter is investigated.

10. The method according to any one of claims 1 to 9,
**characterised in that**
the spectral position of the sub-control channels (7, 8, 9, 10, 31, 32, 42, 43, 44, 45) is determined by means of correlation.

11. A detection system for detecting the bandwidth transmitted by a transmitter within a radio communications system,
wherein the radio communications system is based upon transmission frames (20),
wherein the transmission frames (20) comprise a fixed time extension (34) and a variable spectral extension (14),
wherein the transmission frames (20) consist of a plurality of sub-units (21, 22, 23, 24, 25, 26, 27, 28, 29, 30),
wherein each sub-unit (21, 22, 23, 24, 25, 26, 27, 28, 29, 30) of the transmission frames (20) contains a control channel, which is subdivided into two sub-control channels (7, 8, 9, 10, 31, 32, 42, 43, 44, 45),
wherein the two sub-control channels (7, 8, 9, 10, 31, 32, 42, 43, 44, 45) are disposed at the spectral edges of the sub-units (21, 22, 23, 24, 25, 26, 27, 28, 29, 30) of the transmission frames (20),
wherein the detection system contains means for determining the transmitted bandwidth by determining the spectral extension (14) of the transmission frame (20), and
wherein the means for determining the spectral extension (14) determines the spectral extension of the respective transmission frame (20) by determining the spectral positions of the sub-control channels (7, 8, 9, 10, 31, 32, 42, 43, 44, 45) in the sub-units (21, 22, 23, 24, 25, 26, 27, 28, 29, 30) of the transmission frames (20).

12. The detection system according to claim 11,
**characterised in that**,
the detection system is embodied in such a manner that at least in one sub-unit (24) of a transmission frame (20), information is transmitted by means of the control channel, and
that the determination of the spectral extension (14) of the respective transmission frame (20) is implemented during the transmission of information by means of the control channel.

13. The detection system according to claim 12,
**characterised in that**
the detection system is embodied in such a manner that one sub-unit (21, 22, 23, 24, 25, 26, 27, 28, 29, 30) of a transmission frame (20) consists of at least two slots (2, 3, 46, 47),
that a slot (2, 3, 46, 47) is a time portion of a sub-unit (21, 22, 23, 24, 25, 26, 27, 28, 29, 30) of a transmission frame (20),
that, during the first slot (46) of the at least one sub-unit (21, 22, 23, 24, 25, 26, 27, 28, 29, 30) of the transmission frame (20), in which information is transmitted by means of the control channel, this information can be transmitted by means of the first sub-control channel (42), and that, during the second slot (47) of the at least one sub-unit (21, 22, 23, 24, 25, 26, 27, 28, 29, 30) of the transmission frame (20), in which information is transmitted by means of the control channel, this information can be transmitted by means of the second sub-control channel (45).

14. The detection system according to any one of claims 11 to 13,
**characterised in that**
the detection system is embodied in such a manner that the transmitter is a mobile communications device.

15. The detection system according to any one of claims 11 to 14,
**characterised in that**
the detection system is embodied in such a manner that the sub-control channels (7, 8, 9, 10, 31, 32, 42, 43, 44, 45) comprise a fixed spectral extension (11).

16. The detection system according to any one of claims 11 to 15,
**characterised in that**
a transmission frame (20) consists of 2 to 20, preferably 10 sub-units (21, 22, 23, 24, 25, 26, 27, 28, 29, 30), and
that information can be transmitted on the control channel in exactly one sub-unit (24) in every transmission frame (20).

17. The detection system according to claim 16,
**characterised in that**
the detection system is embodied in such a manner that all sub-units (21, 22, 23, 24, 25, 26, 27, 28, 29, 30) of the transmission frames (20) contain a data channel (4, 5 33, 40, 41),
that, in one sub-unit (21, 22, 23, 24, 25, 26, 27, 28, 29, 30) of the transmission frames (20), information can be transmitted either by means of the control channel or by means of the data channel (4, 5 33, 40, 41).

18. The detection system according to any one of claims 11 to 17,
**characterised in that**
the detection system is embodied in such a manner that the bandwidth of the transmission frames (20) is specified by a further transmitter within the radio communications system.

19. The detection system according to claim 18,
**characterised in that**
the detection system is embodied in such a manner that the deviation of the bandwidth transmitted by the transmitter from the bandwidth specified by the further transmitter is investigated.

20. The detection system according to any one of claims 11 to 19,
**characterised in that**
the detection system is embodied in such a manner that the spectral position of the sub-control channels (7, 8, 9, 10, 31, 32, 42, 43, 44, 45) can be determined by means of correlation.

## Revendications

1. Procédé de détection d'une bande passante transmise par un émetteur dans un système de radiocommunication, dans lequel le système de radiocommunication est basé sur une trame d'émission (20),
dans lequel les trames d'émission (20) disposent d'un étalement temporel fixe (34) et d'un étalement spectral variable (14),
dans lequel les trames d'émission (20) sont constituées d'une pluralité de sous-unités (21, 22, 23, 24, 25, 26, 27, 28, 29, 30),
dans lequel chaque sous-unité (21, 22, 23, 24, 25, 26, 27, 28, 29, 30) des trames d'émission (20) comporte un canal de contrôle, qui est divisé en deux canaux de contrôle partiels (7, 8, 9, 10, 31, 32, 42, 43, 44, 45),
dans lequel les deux canaux de contrôle partiels (7, 8, 9, 10, 31, 32, 42, 43, 44, 45) sont disposés sur les bords spectraux des sous-unités (21, 22, 23, 24, 25, 26, 27, 28, 29, 30) des trames d'émission (20),
dans lequel la bande passante transmise est détectée par détermination de l'étalement spectral (14) de la trame d'émission (20),
dans lequel l'étalement spectral (14) de la trame d'émission respective (20) est déterminé par détermination des positions spectrales des canaux de contrôle partiels (7, 8, 9, 10, 31, 32, 42, 43, 44, 45) dans les sous-unités (21, 22, 23, 24, 25, 26, 27, 28, 29, 30) des trames d'émission (20).

2. Procédé selon la revendication 1, **caractérisé en ce que**
des informations sont transmises au moyen du canal de contrôle au moins dans une sous-unité (24) d'une trame d'émission (20), et
**en ce que** la détermination de l'étalement spectral (14) de la trame d'émission respective (20) se produit pendant la transmission des informations par l'intermédiaire du canal de contrôle.

3. Procédé selon la revendication 2, **caractérisé en ce que**
une sous-unité (21, 22, 23, 24, 25, 26, 27, 28, 29, 30) d'une trame d'émission (20) est constituée d'au moins deux intervalles (2, 3, 46, 47),
**en ce qu'**un intervalle (2, 3, 46, 47) est un segment de temps d'une sous-unité (21, 22, 23, 24, 25, 26, 27, 28, 29, 30) de la trame d'émission (20),
**en ce que**, pendant le premier intervalle (46) d'au moins une sous-unité (21, 22, 23, 24, 25, 26, 27, 28, 29, 30) de la trame d'émission (20), dans laquelle des informations sont transmises au moyen du canal de contrôle, ces informations sont transmises par l'intermédiaire du premier canal de contrôle partiel (42), et
**en ce que**, pendant le second intervalle (47) d'au moins une sous-unité (21, 22, 23, 24, 25, 26, 27, 28, 29, 30) de la trame d'émission (20), dans laquelle des informations sont transmises au moyen du canal de contrôle, ces informations sont transmises au moyen du second canal de contrôle partiel (45).

4. Procédé selon l'une des revendications 1 à 3, **caractérisé en ce que**
un émetteur est un appareil de communication mobile.

5. Procédé selon l'une des revendications 1 à 4, **caractérisé en ce que**
les canaux de contrôle partiels (7, 8, 9, 10, 31, 32, 42, 43, 44, 45) disposent d'un étalement spectral fixe (11).

6. Procédé selon l'une des revendications 1 à 5, **caractérisé en ce que**
une trame d'émission (20) est constituée de 2 à 20, de préférence 10 sous-unités (21, 22, 23, 24, 25, 26, 27, 28, 29, 30), et
**en ce que** des informations sont transmises sur le canal de contrôle précisément dans une sous-unité (24) dans chaque trame d'émission (20).

7. Procédé selon la revendication 6, **caractérisé en ce que**
toutes les sous-unités (21, 22, 23, 24, 25, 26, 27, 28, 29, 30) de la trame d'émission (20) comportent un canal de données (4, 5, 33, 40, 41),
**en ce que**, dans une sous-unité (21, 22, 23, 24, 25, 26, 27, 28, 29, 30) de la trame d'émission (20), des informations sont transmises soit par l'intermédiaire du canal de contrôle soit par l'intermédiaire du canal de données (4, 5, 33, 40, 41).

8. Procédé selon l'une des revendications 1 à 7, **caractérisé en ce que**
la bande passante des trames d'émission (20) est prédéterminée par un autre émetteur dans le système de radiocommunication.

9. Procédé selon la revendication 8, **caractérisé en ce que**
l'écart de la bande passante émise par l'émetteur est déterminé par la bande passante prédéterminée par l'autre émetteur.

10. Procédé selon l'une des revendications 1 à 9, **caractérisé en ce que**
la position spectrale des canaux de contrôle partiels (7, 8, 9, 10, 31, 32, 42, 43, 44, 45) est déterminée par corrélation.

11. Système de détection pour détecter la bande passante transmise par un émetteur dans un système de radiocommunication, dans lequel le système de radiocommunication est basé sur des trames d'émission (20),
dans lequel les trames d'émission (20) disposent d'un étalement temporel fixe (34) et d'un étalement spectral variable (14),
dans lequel les trames d'émission (20) sont constituées d'une pluralité de sous-unités (21, 22, 23, 24, 25, 26, 27, 28, 29, 30),
dans lequel chaque sous-unité (21, 22, 23, 24, 25, 26, 27, 28, 29, 30) des trames d'émission (20) comporte un canal de contrôle, qui est séparé en deux canaux de contrôle partiels (7, 8, 9, 10, 31, 32, 42, 43, 44, 45),
dans lequel les deux canaux de contrôle partiels (7, 8, 9, 10, 31, 32, 42, 43, 44, 45) sont disposés sur les bords spectraux des sous-unités (21, 22, 23, 24, 25, 26, 27, 28, 29, 30) des trames d'émission (20),
dans lequel le système de détection comporte des moyens pour déterminer la bande passante transmise par détermination de l'étalement spectral (14) de la trame d'émission (20), et
dans lequel les moyens de détermination de l'étalement spectral (14) déterminent l'étalement spectral de la trame d'émission respective (20) par détermination des positions spectrales des canaux de contrôle partiels (7, 8, 9, 10, 31, 32, 42, 43, 44, 45) dont les sous-unités (21, 22, 23, 24, 25, 26, 27, 28, 29, 30) de la trame d'émission (20).

12. Système de détection selon la revendication 11, **caractérisé en ce que**
le système de détection est réalisé de sorte que des informations sont transmises au moins dans une sous-unité (24) d'une trame d'émission (20) par l'intermédiaire du canal de contrôle, et
**en ce que** la détermination de l'étalement spectral (14) de la trame d'émission respective (20) se produit pendant la transmission des informations par l'intermédiaire du canal de contrôle.

13. Système de détection selon la revendication 12, **caractérisé en ce que**
le système de détection est réalisé de sorte qu'une sous-unité (21, 22, 23, 24, 25, 26, 27, 28, 29, 30) d'une trame d'émission (20) est constituée d'au moins deux intervalles (2, 3, 46, 47),
**en ce qu'**un intervalle (2,3, 46, 47) est un segment temporel d'une sous-unité (21, 22, 23, 24, 25, 26, 27, 28, 29, 30) d'une trame d'émission (20),
**en ce que**, pendant le premier intervalle (46) d'au moins une sous-unité (21, 22, 23, 24, 25, 26, 27, 28, 29, 30) de la trame d'émission (20), dans laquelle des informations sont transmises au moyen du canal de contrôle, ces informations peuvent être transmises par l'intermédiaire du premier canal de contrôle partiel (42), et
**en ce que**, pendant le second intervalle (47) d'au moins une sous-unité (21, 22, 23, 24, 25, 26, 27, 28, 29, 30) de la trame d'émission (20), dans laquelle des informations sont transmises au moyen du canal de contrôle, ces informations peuvent être transmises par l'intermédiaire du second canal de contrôle partiel (45).

14. Système de détection selon l'une des revendications 11 à 13, **caractérisé en ce que**
le système de détection est réalisé de sorte que l'émetteur est un appareil de communication mobile.

15. Système de détection selon l'une des revendications 11 à 14, **caractérisé en ce que**
le système de détection est réalisé de sorte que les canaux de contrôle partiels (7, 8, 9, 10, 31, 32, 42, 43, 44, 45) disposent d'un étalement spectral fixe (11).

16. Système de détection selon l'une des revendications 11 à 15, **caractérisé en ce que**
le système de détection est réalisé de sorte qu'une trame d'émission (20) est constituée de 2 à 20, de préférence 10 sous-unités (21, 22, 23, 24, 25, 26, 27, 28, 29, 30), et
**en ce que** des informations peuvent être transmises sur le canal de contrôle précisément dans une sous-unité (24) dans chaque trame d'émission (20).

17. Système de détection selon la revendication 16, **caractérisé en ce que**
le système de détection est réalisé de sorte que toutes les sous-unités (21, 22, 23, 24, 25, 26, 27, 28, 29, 30) des trames d'émission (20) comportent un canal de données (4, 5, 33, 40, 41), et
**en ce que**, dans une sous-unité (21, 22, 23, 24, 25, 26, 27, 28, 29, 30) des trames d'émission (20), des informations peuvent être transmises soit par l'intermédiaire du canal de contrôle soit par l'intermédiaire du canal de données (4, 5, 33, 40, 41).

18. Système de détection selon l'une des revendications 11 à 17, **caractérisé en ce que**
le système de détection est réalisé de sorte que la bande passante des trames d'émission (20) est prédéterminée par un autre émetteur dans le système de radiocommunication.

19. Système de détection selon la revendication 18, **caractérisé en ce que**
le système de détection est réalisé de sorte que l'écart de la bande passante émise par l'émetteur peut être détecté par la bande passante prédéterminée de l'autre émetteur.

20. Système de détection selon l'une des revendications 11 à 19, **caractérisé en ce que**
le système de détection est réalisé de sorte que la position spectrale des canaux de contrôle partiels (7, 8, 9, 10, 31, 32, 42, 43, 44, 45) peut être déterminée par corrélation.
